# EUROPÄISCHE PATENTSCHRIFT

(11) **EP 1 447 165 B1**
(45) Veröffentlichungstag und Bekanntmachung des Hinweises auf die Patenterteilung: **29.11.2006**
(21) Anmeldenummer: 04002298.0
(22) Anmeldetag: 03.02.2004
(51) Int. Cl.: B23K 11/06, C22F 1/14, C01B 3/50, B01D 63/08, B23K 11/30, B23K 11/00

(54) **Verfahren und Anordnung zum Widerstandsnahtschweissen einer Folie und mindestens eines Folienträgers eines Brennstoffzellensystems**
Method and device for resistance seam welding a foil and at least one foil support member of a fuel cell system
Procédé et appareil pour le soudage par résistance de joints continus d'une feuille et d'au moins un support d'un système de pile à combustible

(30) Priorität: 14.02.2003 DE 10306235
(43) Veröffentlichungstag der Anmeldung: 18.08.2004
(73) Patentinhaber: DaimlerChrysler AG, 70567 Stuttgart (DE)
(72) Erfinder: Beisswenger, Thomas, 70184 Stuttgart (DE); Lamm, Arnold, Dr., 89275 Elchingen (DE); Poschmann, Thomas, Dr., 89073 Ulm (DE); Vogel, Bernhard, 70372 Stuttgart (DE); Weger, Wolfgang, 73269 Hochdorf (DE); Wiesheu, Norbert, 89312 Günzburg (DE)

(56) Entgegenhaltungen:
- DE-C- 4 438 281
- FR-A- 1 087 321
- US-A- 2 404 632
- US-A- 3 469 372
- US-A1- 2002 083 829
- US-B1- 6 372 363

## Beschreibung

Die Erfindung betrifft ein Verfahren zum Widerstandsnahtschweißen einer Folie und mindestens eines Folienträgers eines Brennstoffzellensystems nach dem Oberbegriff des Anspruchs 1.

Bei Brennstoffzellen, die mit Wasserstoff betrieben werden, der durch eine Reformierungsreaktion aus flüssigen Kohlenwasserstoffen, z.B. aus Methanol, gewonnen wird, werden Membranmodule verwendet, die Metallseparationsmembranen- oder folien enthalten. Metallseparationsfolien arbeiten bei niedrigen Permeationsraten selektiv und temperaturstabil. Bei der selektiven Abtrennung von Wasserstoff mittels einer Metallseparationsfolie hängt die Permeationsrate vom Material der Folie, dem Druck, der Temperatur und der Foliendicke ab. Der Temperaturbereich liegt im allgemeinen zwischen 250°C und 450°C. Unter 250°C tritt keine nennenswerte Wasserstoffabscheidung ein. Bei Verwendung von Palladium-Kupfer-Legierungen treten oberhalb 450 °C intermetallischen Gefügeumwandlungen auf, die die Permeation massiv verschlechtern. Die Metallseparationsfolien trennen im Membranmodul einen Hochdruckbereich von einem Niederdruckbereich ab. Je höher der Differenzdruck zwischen beiden Bereichen ist, desto besser ist die Permeationsrate. Der Differenzdruck ist durch die Festigkeit der Folie begrenzt. Beim Erzeugen hoher Drücke muss viel Energie aufgewandt werden, so dass der Wirkungsgrad des Brennstoffzellensystems sinkt. Je dünner eine Folie ist, desto höher ist die Permeationsrate. Metallseparationsfolien haben in der Regel eine Dicke von weniger als 25 Mikrometern. Zur Verwendung in Membranmodulen sind die Metallseparationsfolien gefasst. Bei bekannten Lösungen werden die Metallseparationsfolien mit Graphitdichtungen verpresst oder durch Aufspattern von Sperrschichten dichtend miteinander verbunden. Die bekannten Lösungen besitzen eine Kohlenmonoxid-Leckagerate, die für eine Serienanwendung nicht ausreichend ist. Wenn neben Wasserstoff Kohlenmonoxid auf die Niederdruckseite diffundiert, dann ist die erforderliche Reinheit das Anodengases für das Brennstoffzellensystem nicht gegeben.

In der Offenlegungsschrift DE 100 44 406 A1 ist ein Wasserstoffseparator für einen Brennstoffzellenreformer beschrieben, bei dem eine 3-15 Mikrometer dicke Palladiumfolie durch Pressen oder durch Walzen und Pressen auf eine maschendrahtförmige Trägerstruktur gebracht wird. Die Folie gleicht sich zum Teil der Trägerstruktur an, wodurch die wirksame Fläche vergrößert wird und die Folie ohne zu reißen oder Falten zu bilden expandieren oder kontrahieren kann. Die maschendrahtförmige Struktur hat den Nachteil, dass Hoch- und Niederdruckseiten des Brennstoffzellenreformers durch die Welligkeit nicht zuverlässig dicht voneinander betrieben werden können.

Zum Verbinden dünner Werkstücke kommen prinzipiell Schweißverfahren in Frage. Bei jeder Verschweißung erfolgt eine Verschmelzung zweier Werkstücke, wobei beide Werkstücke an einer Schweißnaht in den flüssigen Zustand gebracht werden. Da in der Regel die Aufschmelzenergie von einem Ort aus, wie z. B. einem Gasbrenner, einem elektrischen Lichtbogen oder einer Laserlichtquelle, zugeführt wird, muss die Energie beiden Werkstücken ausreichend zur Verfügung gestellt werden. Sollen eine Folie und ein oder zwei Folienträger eines Brennstoffzellensystems miteinander verschweißt werden, dann besteht das Problem, dass die Fügepartner sehr unterschiedliche Massen bzw. Dicken aufweisen, so dass die Folie zuerst aufschmelzen würde und weglaufen würde, ohne sich mit dem unaufgeschmolzenen Folienrahmen zu verbinden. Die beiden Fügepartner mechanisch zusammenzupressen kommt bei Gasschmelzverfahren, elektrischen Lichtbogenverfahren oder bei der Anwendung von Laserlicht nicht in Frage, da die erzeugte Vorspannung möglichst im Schweißbereich liegen muss und damit mit aufgeschmolzen, d. h., mit verschweißt, wird.

Bei dem in JP 08-215 551 A beschriebenen Wasserstoffseparator ist eine dünne Separatorfolie auf einem porösen Metallkörper aufgebracht. Zum Ausgleich von Unebenheiten ist im Randbereich des Metallkörpers ein umlaufender Stützrahmen eingebracht. Die Konstruktion aus Separatorfolie, Stützrahmen und Metallkörper wird durch Dichtungsschweißen mit einer Halterung verbunden, so dass eine Trennung zwischen einem Hochdruckbereich und einem Niederdruckbereich entsteht. Das Dichtungsschweißen geschieht mit einem Laser oder einem Elektronenstrahl, wobei an der Stirnseite besagter Konstruktion und an der Halterung eine dichtende Schweißnaht entsteht. Aufgrund der unterschiedlichen Dicken der verwendeten Materialien besteht die Gefahr von Defekten insbesondere im Bereich der sehr dünnen Separatorfolie. Die Zuverlässigkeit der Dichtung wird beeinträchtigt.

Beim Verbinden dünner Werkstücke kommen weiterhin Rollennahtschweißverfahren in Betracht. Diese Verfahren werden dem Widerstandsschweißen zugeordnet. Die zu verbindenden Werkstücke werden zwischen zwei Rollen hindurchbewegt. Während die Rollen rotieren, übertragen sie Kraft und Strom auf die Werkstücke. Bei andauerndem Strom entsteht eine durchgehende Liniennaht. Die Werkstücke besitzen einen elektrischen Widerstand. Bei Stromfluss entsteht infolge des spezifischen Widerstandes der Fügeteile Wärme, so dass die benötigte Aufschmelzenergie freigesetzt wird. Bei unterschiedlich dicken Werkstücken erfolgt kein Wegschmelzen des dünneren Werkstücks, weil die Werkstücke durch die Rollen zusammengepresst werden. Die Rollen selbst sind aus einem hochschmelzenden Metall und werden aktiv gekühlt, so dass keine Verbindung mit dem Werkstück entsteht. Mit herkömmlichen Rollnahtschweißverfahren können keine sehr dünnen Werkstücke mit relativ dicken Werkstücken verschweißt werden, weil die Gefahr besteht, dass jeweils das dünne Werkstück beschädigt wird.

In der US 2 404 632 wird ein Widerstandsnahtschweißverfahren mit einer Rolle und einem ebenen Stützelement beschrieben, wodurch der Zeitraum, in der die Schweißzone mit Druck beaufschlagt wird, verlängert wird, was bei bestimmten Aluminiumlegierungen vorteilhaft ist.

Aufgabe der Erfindung ist es, ein Verfahren zum Widerstandsnahtschweißen einer Folie und mindestens eines Folienträgers eines Brennstoffzellensystems zu entwickeln, welches die Leckagerate für Kohlenmonoxid beim Einsatz in einem Membranmodul verringert und die Zuverlässigkeit des Brennstoffzellensystems verbessert.

Die Aufgabe wird mit einem Verfahren mit den Merkmalen nach Anspruch 1 gelöst. Vorteilhafte Ausgestaltungen sind in den Unteransprüchen enthalten.

Gemäß der Erfindung werden beim Rollnahtschweißen einer Folie und mindestens eines Folienträgers Folie und Folienträger zusammen auf einem ebenen Stützelement aufliegend relativ zu einer Rollenelektrode bewegt. Die Folie wird vor dem Verschweißen mit einem oder zwei Folienrahmen mechanisch auf dem Stützelement fixiert. Als Stützelement ist vorzugsweise ein Aufspanntisch mit einer Schweißleiste vorgesehen. Beim Schweißen kommt in jedem Fall die Folie nicht mit der Rollenelektrode in Berührung. Die Rollenelektrode rollt auf dem oben liegenden, relativ dicken Folienrahmen ab, wobei die Folie flach auf dem Tisch oder zwischen den zwei Folienrahmen fixiert bleibt. Damit ist ausgeschlossen, dass die dünne Folie durch die Pressung der Rollenelektrode und die Abrollbewegung beschädigt wird. Die Anpresskräfte werden von dem mit der Rollenelektrode in Kontakt stehenden Folienrahmen aufgenommen. Beim Schweißen kann das Stützelement bzw. der Aufspanntisch relativ zur feststehenden Achse der Rollenelektrode bewegt werden oder die Rollenelektrode wird entlang des feststehenden Stützelementes bewegt. Sollen mehrere parallele Liniennähte erzeugt werden, können entsprechend viele Rollenelektroden in paralleler Anordnung vorgesehen werden und gleichzeitig mit Strom versorgt werden. Zur Vermeidung von Falten und Knickungen in der Folie können die verschweißten Werkstücke einer Wärmebehandlung unterzogen werden. Zur Erhöhung der Permeationsrate kann sich dem Schweißen ein Glühen im Vakuum oder unter einem Schutzgas oder reinem Wasserstoff anschließen. Die so verschweißten Folienträger und Folien gestatten den Aufbau von leichtgewichtigen Wasserstoffseparationsmodulen.

Die Erfindung soll nachstehend anhand von Ausführungsbeispielen näher erläutert werden, es zeigen:
- Fig. 1:: ein Schema einer Schweißgruppe bestehend aus einem Folienrahmen und einer Folie in zwei Ansichten,
- Fig. 2:: ein Schema einer Schweißgruppe bestehend aus zwei Folienrahmen und einer Folie,
- Fig. 3:: ein Schema einer Schweißvorrichtung zur Herstellung der Schweißgruppe nach Fig. 1,
- Fig. 4:: eine orthogonale Ansicht der Schweißvorrichtung nach Fig. 3, und
- Fig. 5:: ein Schema einer Schweißvorrichtung zur Herstellung der Schweißgruppe nach Fig. 2.

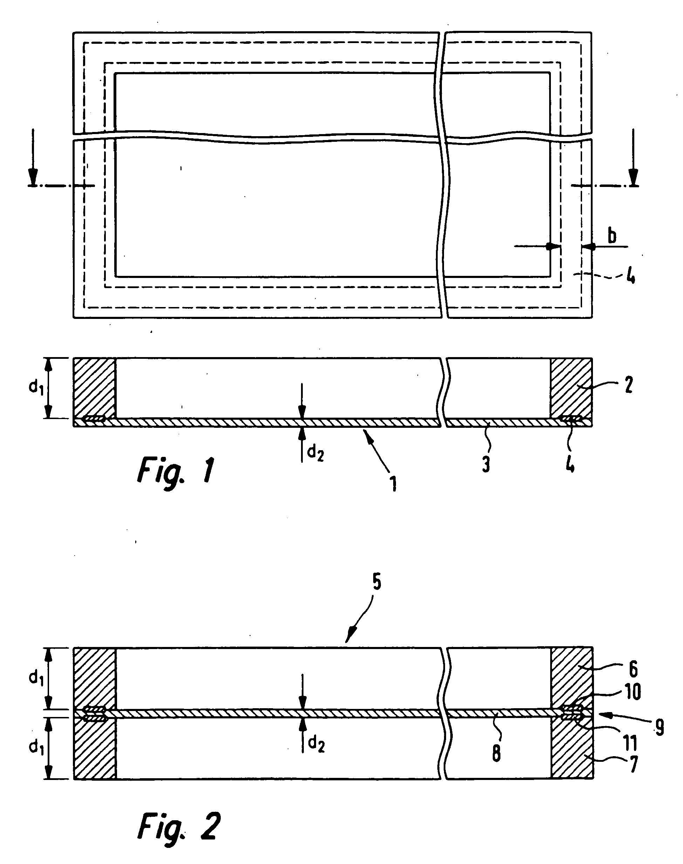

Das in Fig. 1 dargestellte Schema einer Schweißgruppe 1 zeigt in Draufsicht und in Schnittdarstellung einen Folienrahmen 2 und eine Folie 3, die zur Verwendung in einem Brennstoffzellensystem miteinander verschweißt sind. Die Schweißnaht 4 der Breite b verläuft umlaufend und mittig zum Folienrahmen 2, der die gleichen äußeren Abmessungen wie die Folie 3 aufweist. Der Folienrahmen 2 besitzt die Dicke d₁ = 200µm und besteht aus einem ferritischen Werkstoff, wie einem austenitischen Stahl oder Nickel. Die Folie 3 hat die Dicke d₂ = 10µm. Die Dicke d₂ der Folie 3 kann je nach Anwendungsfall variieren. Praktikable Dicken sind weiterhin 18µm oder 25µm. Die Folie 3 ist zur Wasserstoffseparation in einem Reformermodul des Brennstoffzellensystems geeignet und besteht beispielsweise aus einer Palladium und Kupfer enthaltenden Legierung. Andere Legierungen sind ebenfalls möglich. Die Schweißnaht 4 verbindet Folie 3 und Folienrahmen 2 so dicht miteinander, dass eine Leckagerate von kleiner als 1,0 E-7 mbar * Liter/Sekunde besteht bzw. dass weniger als 40 ppm Kohlenmonoxid im Anodengasstrom vorhanden ist.

Fig. 2 zeigt eine Schweißgruppe 5 mit zwei gleichdicken und gleichgroßen Folienrahmen 6, 7 und einer dazwischenliegenden Folie 8. Bezüglich Material, Abmessungen und Dichtheit gilt das zu Fig. 1 Gesagte. Die Schweißgruppe 5 besitzt eine umlaufende Schweißnaht 9 mit zwei Aufschmelzbereichen 10, 11 jeweils zwischen der Folie 8 und den Folienrahmen 6, 7.

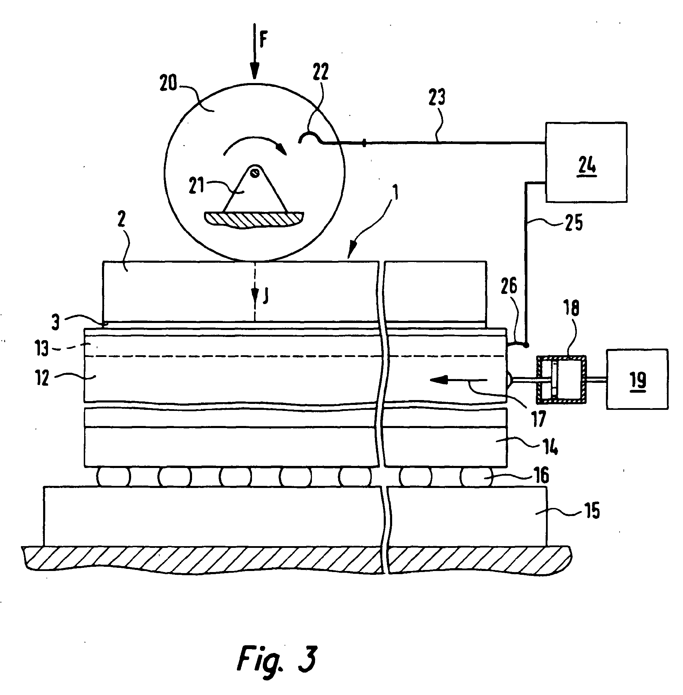

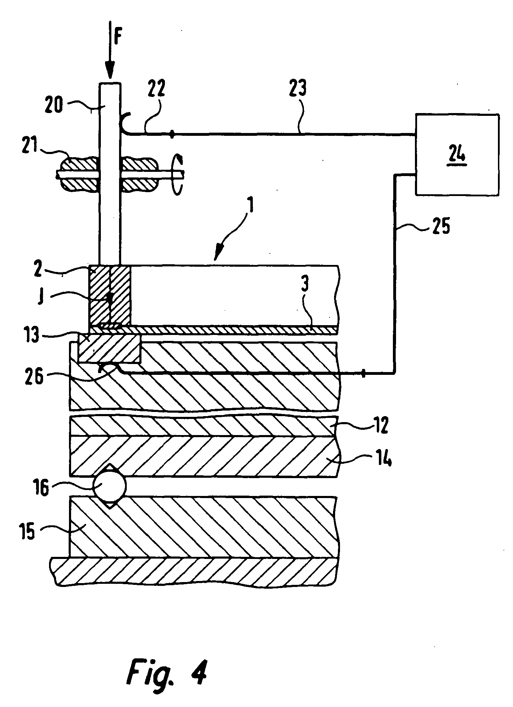

Die Fig. 3 und 4 beinhalten ein Schema einer Schweißvorrichtung zur Herstellung der Schweißgruppe nach Fig. 1. Der oben liegende Folienrahmen 2 und die darunter liegende Folie 3 sind fluchtend übereinander gelegt, mechanisch vorfixiert und auf einen Aufspanntisch 12 positioniert. Auf der der Folie 3 zugewandten Seite ist in den Aufspanntisch 12 eine Schweißleiste 13 etwas überstehend eingebettet. Unten am Aufspanntisch 12 befindet sich Führungsleisten 14 einer Längsführung. Zur Längsführung gehört weiterhin eine stationäre Führungsbahn 15 und Wälzkörper 16. Mit der Längsführung ist der Aufspanntisch 12 in Vorschubrichtung 17 verschiebbar. Um den Aufspanntisch 12 zu verschieben, ist ein Arbeitszylinder 18 vorgesehen, der mit einer Druckmittelsteuerung 19 in Verbindung steht. An Stelle des Arbeitszylinders 18 kann auch jedes beliebige Positioniergetriebe Anwendung finden. Eine Seite des Folienrahmens 2 und die Schweißleiste 13 liegen parallel zur Vorschubrichtung 17. Mittig zum Seitenschenkel des Folienrahmens 2 kontaktiert den Folienrahmen 2 eine Rollenelektrode 20, die stationär in einem Lager 21 drehbar gehalten ist. Die Rollenelektrode 20 drückt mit einer Kraft F die Schweißgruppe 1 gegen die Schweißleiste 13 im Aufspanntisch 12. Die Rollenelektrode 20 ist mit einem Kontakt 22 verbunden, der über einer Leitung 23 zu einem Pol einer Stromversorgung 24 führt. Der andere Pol der Stromversorgung 24 ist über eine Leitung 25 mit einem Kontakt 26 verbunden, der den Schweißstrom zur Schweißleiste 13 führt. Die Kontakte 22, 26 sind geeignet hohe Schweißströme fließen zu lassen.

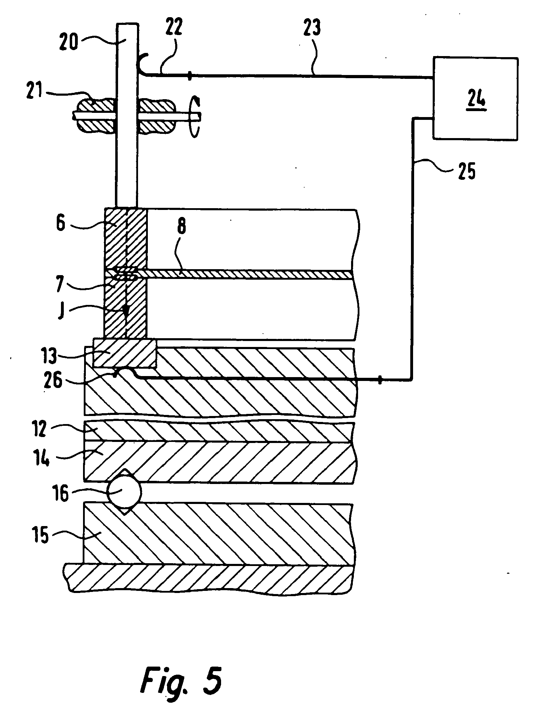

Fig. 5 zeigt in analoger Darstellung wie Fig. 4 den Aufbau der Schweißanordnung zum Herstellen der Schweißgruppe nach Fig. 2. Im Unterschied zu Fig. 4 sind auf dem Aufspanntisch 12 zwei Folienrahmen 6, 7 mit einer dazwischenliegenden Folie 8 mechanisch vorfixiert gehalten. Die Rollenelektrode 20 kontaktiert den oben liegenden Folienrahmen 6, während der unten liegende Folienrahmen 7 die Schweißleiste 13 kontaktiert. Alle sonstigen in Fig. 5 gezeigten Elemente besitzen die in Fig. 3 und 4 beschriebenen Funktionen.

Im folgenden soll beschrieben werden, wie mit den Anordnungen nach Fig. 3-5 die Schweißgruppen 1, 5 hergestellt werden können:

Zum dauerhaften und dichten Verbinden der Folien 3 bzw. 8 mit den Folienträgern 2 bzw. 6, 7 wird mittels dem Arbeitszylinder 18 der Aufspanntisch 12 in Vorschubrichtung 17 mit gleichförmiger Geschwindigkeit bewegt. Die Stromversorgung 24 bewirkt einen Stromfluss der Stärke I, wobei der Stromkreis durch die Leitungen 23, 25, die Kontakte 22, 26, die Rollenelektrode 20, die Schweißleiste 13 und die jeweilige Schweißgruppe 1 bzw. 5 gebildet ist. Die Schweißleistung ist entsprechend dem Ohmschen Gesetz durch den Widerstand und die Stromstärke I bestimmt. Der Widerstand an der Schweißstelle setzt sich aus den Einzelwiderständen jedes Werkstückes zusammen. Der Einzelwiderstand eines Werkstückes ergibt sich bei systematischer Betrachtung aus dem Produkt des spezifischen Widerstandes und dem Quotienten aus Länge und Querschnittsfläche des Strompfades. Dabei bleibt außer Acht, dass eine Schweißnaht nicht exakt definiert verläuft und mehrere Strompfade parallel verlaufen können. Der spezifische Widerstand ist werkstoffspezifisch. Die Länge des Strompfades entspricht der Materialdicke eines Werkstückes und die Querschnittsfläche entspricht der Auflagefläche der Rollenelektrode 20 auf dem obenliegenden Folienrahmen 2 bzw. 6. Die Auflagefläche wird durch die gleichbleibenden Anpresskräfte der Rollenelektrode 20 konstant gehalten. Damit ergibt sich die Aufschmelzwärme im Material als Funktion der Materialdicke und des Schweißstromes I. D. h., je dünner das Werkstück ist, desto weniger Wärme wird darin frei und entsprechend weniger Aufschmelzwärme wird benötigt. Um die Übergangswiderstände gering zu halten, werden Folienrahmen 2, 6, 7 und die Folien 3, 8 mit einer geringen Rauhtiefe, vorzugsweise im Bereich von 1-2 µm gefertigt, was durch Walzen ohne weiteres erreicht wird.

Bei der Anordnung nach Fig. 3 und 4 wird nur in dem einen, oben liegenden, metallischen Folienrahmen 2 Widerstandswärme erzeugt. Da die Folie 3 auf der Schweißleiste 13 aufliegt und in der Folie 3 selbst zu wenig Wärme beim Schweißvorgang entsteht, muss die Schweißleiste 13 einen hohen spezifischen Widerstand besitzen, um Wärme bereitzustellen, die auf die dünne Folie 3 übertragen wird. Um die Schweißbedingungen konstant zu halten, ist in diesem Fall die Schweißleiste 13 und die Rollenelektrode 20 aktiv gekühlt. Andernfalls würde über mehrere Schweißvorgänge eine Erwärmung der Schweißleiste 13 und der Rollenelektrode 20 eintreten, die zu einer Änderung der Schweißparameter führen würde. Die Schweißleiste 13 besteht bei dieser Anordnung vorteilhaft aus einer Wolfram-Kupfer-Legierung, die eine hohe Standzeit besitzt. Das Material der Rollenelektrode 20 weist einen geringen spezifischen Widerstand auf. Ein geeignetes Material mit einer hohen Standzeit ist eine Kupfer-Beryllium-Legierung oder eine Wolfram-Kupfer-Legierung.

Bei der Anordnung nach Fig. 5 wird Schmelzwärme in beiden metallischen Folienrahmen 6, 7 freigesetzt. Die Schmelzwärme in den Aufschmelzbereichen 10, 11 ist ausreichend, die Folienrahmen 6, 7 und die Folie 8 dicht miteinander zu verbinden. In diesem Fall besteht die Schweißleiste 13 aus einem Werkstoff mit einem kleinem spezifischen Widerstand und hoher Standzeit, was z. B. durch eine Kupfer-Beryllium-Legierung oder eine Wolfram-Kupfer-Legierung gegeben ist.

Da die Rollnahtschweißung mittels einer Relativverschiebung zwischen der Rollenelektrode 20 und Folienrahmen 2, 6 erfolgt, treten beim Schweißen geringe Verschiebungen zwischen Folienrahmen 2, 6 und Folie 3, 8 auf. Dadurch entstehen in der Folie 3, 8 Falten. Beim Einsatz der Folie 3, 8 im Reformermodul eines Brennstoffzellensystems unterliegt die Folie 3, 8 einem Differenzdruck, der die Falten zusammendrückt. Dies bedingt Faltungen und Knicke in der Folie 3, 8. Wenn diese Faltungen und Knicke im Bereich der Schweißnaht 9-11 entstehen, oder sich in der Folie 3, 8 mehrere Knickungen kreuzen, dann können im Folienmaterial Mikrorisse entstehen, die zu Undichtigkeiten führen. Um dies zu vermeiden ist es von Vorteil, wenn die Schweißgruppen 1, 5 einer nachstehend beschriebenen Nachbehandlung unterzogen werden.

Wenn die Folien 3, 8 durch Walzen hergestellt wurden, dann werden die einzelnen Metallkörper gestreckt und gereckt. Dadurch erhöht sich durch die verformungsbedingte Spannungserhöhung im Material auch die Härte des Materials. Diese Erhöhung der Härte ist nicht erwünscht, weshalb die Schweißgruppen 1, 5 nach dem Schweißen einer Wärmebehandlung unterzogen werden. Dabei werden die Folien 3 bzw. 8 zusammen mit den Folienrahmen 2 bzw. 6, 7 bei einer kontrollierten, langsamen Erwärmung auf 425°C erhitzt, eine Stunde lang bei dieser Temperatur gehalten und danach in 0,5 Stunden auf 70°C abgekühlt. Durch die Wärmebehandlung findet in den Folien 3, 8 eine Rekristallisation statt. Nach dieser Behandlung sind keine unerwünschten Spannungen mehr in den Folien 3, 8 enthalten. Die Folien 3 bzw. 8 selbst sind in den Folienrahmen 2 bzw. 6, 7 gespannt. Eventuelle Restfalten in den Folien 3, 8 können mittels geometrischer Spannvorrichtungen beseitigt werden.

Die Permeationsrate einer Folie 3, 8 wird durch die innere Struktur des Folienmaterials bestimmt. Je nach Art der Erstinbetriebnahme einer Folie 3, 8 können sich unterschiedliche Permeationsraten ergeben. Um die Permeation von vornherein dem theoretisch möglichen Wert anzunähern, ist es von Vorteil, die Folien 3 bzw. 8 mit den Folienrahmen 2 bzw. 6, 7 im Vakuum zu glühen. Es ist ebenfalls möglich, die Schweißgruppen 1, 5 unter einem Inertgas oder unter reinem Wasserstoff zu glühen.

### Liste der verwendeten Bezugszeichen

- 1: Schweißgruppe
- 2: Folienrahmen
- 3: Folie
- 4: Schweißnaht
- 5: Schweißgruppe
- 6, 7: Folienrahmen
- 8: Folie
- 9: Schweißnaht
- 10, 11: Aufschmelzbereich
- 12: Aufspanntisch
- 13: Schweißleiste
- 14: Führungsleiste
- 15: Führungsbahn
- 16: Wälzkörper
- 17: Vorschubrichtung
- 18: Arbeitszylinder
- 19: Druckmittelsteuerung
- 20: Rollenelektrode
- 21: Lager
- 22: Kontakt
- 23: Leitung
- 24: Stromversorgung
- 25: Leitung
- 26: Kontakt

## Patentansprüche

1. Verfahren zum Widerstandsnahtschweißen einer Folie und mindestens eines Folienträgers eines Brennstoffzellensystems,
bei dem der dicker ausgeführte Folienträger mit der Folie gepaart wird,
und bei dem unter Verwendung einer Rollenelektrode und einer elektrischen Stromversorgung Folienträger und Folie durch Widerstandserhitzung gasdicht verbunden werden,
wobei
beim Schweißen die Folie (3, 8) zusammen mit dem Folienträger (2, 6, 7) auf einem ebenen Stützelement (12, 13) aufliegend relativ zur Rollenelektrode (20) bewegt wird.

2. Verfahren nach Anspruch 1,
**dadurch gekennzeichnet,**
**dass** beim Verbinden mit genau einem Folienträger (2) die Folie (3) direkt auf dem Stützelement (12, 13) aufliegend relativ zur Rollenelektrode (20) bewegt wird.

3. Verfahren nach Anspruch 1,
**dadurch gekennzeichnet,**
**dass** beim Verbinden mit zwei Folienträgern (6, 7) die Folie (8) zwischen den Folienträgern (6, 7) angeordnet wird,
und **dass** ein Folienträger (7) mit dem Stützelement (12, 13) in Kontakt gebracht wird und zusammen mit der Folie (8) und dem zweiten Folienträger (6) relativ zur Rollenelektrode (20) bewegt wird.

4. Verfahren nach Anspruch 1,
**dadurch gekennzeichnet,**
**dass** nach dem Schweißen die mit dem Folienträger (2, 6, 7) verbundene Folie (3, 8) einer Wärmebehandlung unterzogen wird.

5. Verfahren nach Anspruch 5,
**dadurch gekennzeichnet,**
**dass** die Folie (3, 8) während einer ersten Zeitspanne langsam auf einen ersten Temperaturwert erwärmt wird, dass die Folie (3, 8) während einer zweiten Zeitspanne auf dem ersten Temperaturwert gehalten wird,
und **dass** die Temperatur der Folie (3, 8) während einer dritten Zeitspanne auf einen zweiten Temperaturwert abgesenkt wird.

6. Verfahren nach Anspruch 5,
**dadurch gekennzeichnet,**
**dass** beim Verwenden einer Palladium und Kupfer enthaltenden Folie (3, 8) die erste, zweite und dritte Zeitspannen im wesentlichen im Verhältnis 5:2:1 stehen.

7. Verfahren nach Anspruch 6,
**dadurch gekennzeichnet,**
**dass** die erste Zeitspanne annähernd 2,5 Stunden, die zweite Zeitspanne 1 Stunde und die dritte Zeitspanne 0,5 Stunden beträgt.

8. Verfahren nach Anspruch 6,
**dadurch gekennzeichnet,**
**dass** der erste Temperaturwert annähernd 425°C und der zweite Temperaturwert annähernd 70°C betragen.

9. Verfahren nach Anspruch 1,
**dadurch gekennzeichnet,**
**dass** nach dem Schweißen die mit dem Folienträger (2, 6, 7) verbundene Folie (3, 8) einer Nachbehandlung durch Glühen unterzogen wird.

10. Verfahren nach Anspruch 9,
**dadurch gekennzeichnet,**
**dass** die Folie (3, 8) mit dem Folienträger (2, 6, 7) im Vakuum geglüht wird.

11. Verfahren nach Anspruch 9,
**dadurch gekennzeichnet,**
**dass** die Folie (3, 8) und der Folienrahmen (2, 6, 7) unter einem Inertgas oder unter reinem Wasserstoff geglüht werden.

## Claims

1. Method for resistance seam welding of a foil and at least one foil support of a fuel cell system, in which the thicker foil support is paired with the foil, and in which the foil support and the foil are connected in a gastight manner by resistance heating using a roller electrode and an electrical power supply, the foil (3, 8) being moved together with the foil support (2, 6, 7) relative to the roller electrode (20) during the welding while resting on a planar supporting element (12, 13).

2. Method according to Claim 1, **characterized in that**, when connecting to precisely one foil support (2), the foil (3) is moved relative to the roller electrode (20) while resting directly on the supporting element (12, 13).

3. Method according to Claim 1, **characterized in that**, when connecting to two foil supports (6, 7), the foil (8) is arranged between the foil supports (6, 7), and **in that** one foil support (7) is brought into contact with the supporting element (12, 13) and is moved together with the foil (8) and the second foil support (6) relative to the roller electrode (20).

4. Method according to Claim 1, **characterized in that**, after the welding, the foil (3, 8) connected to the foil support (2, 6, 7) is subjected to a heat treatment.

5. Method according to Claim 4, **characterized in that** the foil (3, 8) is slowly heated to a first temperature value during a first time period, **in that** the foil (3, 8) is kept at the first temperature value during a second time period, and **in that** the temperature of the foil (3, 8) is lowered to a second temperature value during a third time period.

6. Method according to Claim 5, **characterized in that**, when a foil (3, 8) containing palladium and copper is used, the first, second and third time periods are substantially in the ratio 5:2:1.

7. Method according to Claim 6, **characterized in that** the first time period is approximately 2.5 hours, the second time period 1 hour and the third time period 0.5 hour.

8. Method according to Claim 6, **characterized in that** the first temperature value is approximately 425°C and the second temperature value is approximately 70°C.

9. Method according to Claim 1, **characterized in that**, after the welding, the foil (3, 8) connected to the foil support (2, 6, 7) is subjected to a subsequent treatment by annealing.

10. Method according to Claim 9, **characterized in that** the foil (3, 8) is annealed with the foil support (2, 6, 7) in a vacuum.

11. Method according to Claim 9, **characterized in that** the foil (3, 8) and the foil frame (2, 6, 7) are annealed under an inert gas or under pure hydrogen.

## Revendications

1. Procédé pour le soudage par résistance de joints continus d'une feuille et d'au moins un support de feuille d'un système de pile à combustible, dans lequel le support de feuille plus épais est couplé à la feuille, et dans lequel le support de feuille et la feuille sont assemblés l'un à l'autre de façon étanche au gaz par chauffage par résistance en utilisant une électrode à galet et une alimentation de courant électrique, dans lequel la feuille (3, 8) avec le support de feuille (2, 6, 7) appuyés sur un élément de soutien plan (12, 13) sont déplacés par rapport à l'électrode à galet (20) pendant le soudage.

2. Procédé selon la revendication 1, **caractérisé en ce que** la feuille (3) appliquée directement sur l'élément de soutien (12, 13) est déplacée par rapport à l'électrode à galet (20) lors de l'assemblage avec uniquement un support de feuille (2).

3. Procédé selon la revendication 1, **caractérisé en ce que** la feuille (8) est disposée entre les deux supports de feuille (6, 7) lors de l'assemblage avec deux supports de feuille (6, 7), et **en ce qu'**un support de feuille (7) est mis en contact avec l'élément de soutien (12, 13) et est déplacé par rapport à l'électrode à galet (20) avec la feuille (8) et le deuxième élément de soutien (6).

4. Procédé selon la revendication 1, **caractérisé en ce qu'**après le soudage, la feuille (3, 8) assemblée au support de feuille (2, 6, 7) est soumise à un traitement thermique.

5. Procédé selon la revendication 4, **caractérisé en ce que** la feuille (3, 8) est chauffée lentement à une première valeur de température pendant un premier intervalle de temps, **en ce que** la feuille (3, 8) est maintenue à la première valeur de température pendant un deuxième intervalle de temps, et **en ce que** la température de la feuille (3, 8) est abaissée à une deuxième valeur de température pendant un troisième intervalle de temps.

6. Procédé selon la revendication 5, **caractérisé en ce que** le premier, le deuxième et le troisième intervalles de temps se trouvent dans un rapport 5:2:1 lorsque l'on utilise une feuille (3, 8) contenant du palladium et du cuivre.

7. Procédé selon la revendication 6, **caractérisé en ce que** le premier intervalle de temps vaut environ 2,5 heures, le deuxième intervalle de temps 1 heure et le troisième intervalle de temps 0,5 heure.

8. Procédé selon la revendication 6, **caractérisé en ce que** la première valeur de température vaut environ 425°C et la deuxième valeur de température environ 70°C.

9. Procédé selon la revendication 1, **caractérisé en ce qu'**après le soudage, la feuille (3, 8) assemblée au support de feuille (2, 6, 7) est soumise à un post-traitement par recuit.

10. Procédé selon la revendication 9, **caractérisé en ce que** la feuille (3, 8) avec le support de feuille (2, 6, 7) est recuite sous vide.

11. Procédé selon la revendication 9, **caractérisé en ce que** la feuille (3, 8) et le support de feuille (2, 6, 7) sont recuits sous un gaz inerte ou sous hydrogène pur.
